# EUROPEAN PATENT SPECIFICATION

(11) **EP 2 537 734 B1**
(45) Date of publication and mention of the grant of the patent: **12.11.2014**
(21) Application number: 12172834.9
(22) Date of filing: 20.06.2012
(51) Int. Cl.: B62D 7/14, B62D 7/15

(54) **Steering system**
Servolenksystem
Système de direction

(30) Priority: 20.06.2011 GB 201110434
(43) Date of publication of application: 26.12.2012
(73) Proprietor: Johnston Sweepers Limited, Dorking, Surrey RH4 1XF (GB)
(72) Inventor: Allport, Mark David Jeremy, Whitstable, Kent CT5 4NL (GB); Knopp, Gareth James, Gillingham, Kent ME7 3QT (GB); Heritage, Martin Brian, Ashford, Kent TN24 9DH (GB)
(74) Representative: Boult Wade Tennant

(56) References cited:
- EP-A2- 0 300 774
- WO-A1-91/19048
- US-A- 5 111 901
- US-A- 5 238 077

## Description

The invention is directed to a steering system for a four-wheeled two-axle mobile machine, and in particular to a hydraulic steering system suitable for road surface cleaning machines.

Road cleaning machines (also known as sweepers) are commonly used to remove unwanted debris from the streets in built-up areas. Such machines are typically equipped with brushes, suction equipment, and/or pressure washing systems. Such machines are designed for use in confined areas within public spaces, on highways and roads, and often in and amongst traffic within towns and cities.

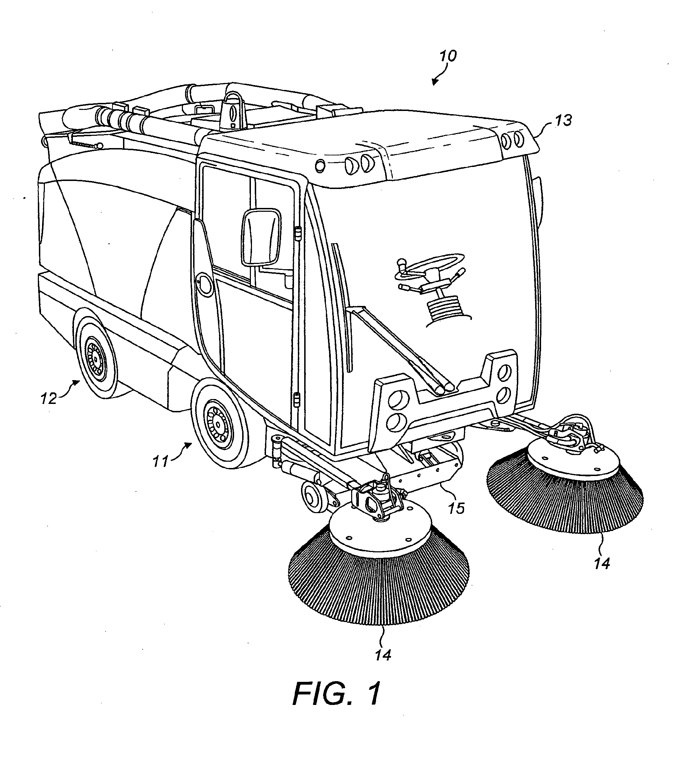

A typical road cleaning machine is shown in Figure 1. The cleaning equipment, in this example comprising brushes and debris collection means, is located at the front of the machine in front of the front axle. This arrangement affords good operator control and visibility from an operator/driver control station/cabin at the front of the vehicle.

Such road cleaning machines conventionally have two selectable modes of operation: a 'work' mode and a 'transit' mode. In the 'work' mode, the machine performs its cleaning function, travelling slowly and usually limited to low speeds, for example up to 15 km/hr. In the 'transit' mode, the machine may be travelling to a place of work or to a place for disposal of the collected debris; speeds in this mode could be up to 50 km/hr, most often travelling alongside and in amongst other road users, and the cleaning functions are automatically inert in this mode. The function of the cleaning and collection means is only operable when the machine is set in the 'work' mode. The two modes are of equal importance and functionality in the operation of the machine.

Road cleaning machines as described are typically steered only by the front axle, employing a high degree of articulation in order to achieve a good degree of manoeuvrability. Whilst such machines may have a small turning circle derived by means of the high degree of articulation of the front wheels, they can suffer a disadvantage where the path of the cleaning equipment does not best follow the perimeter of an outer curve. A known solution to this problem exists where the cleaning equipment is moveably linked to the steering function so as to align it with the turning direction. DE-A-3517079 and EP-A-1612335 disclose such systems.

Alternatively, to improve the sweeping path around smaller curved perimeters, other cleaning machines employ continual four-wheel steering or articulation between fixed front and rear axles. Four-wheel steered and articulated machines are better able to clean and follow outer perimeters as the centre of their tuning arc is longitudinally closer to their cleaning and collection means than for front-wheel steered machines. However, a disadvantage of such four-wheel steer and articulated machines is that they behave in an unusual manner in comparison with other road vehicles, due to the fact that the tail end of such machines swings outwards when negotiating bends and tight turns. Such characteristics may be disconcerting to other road users when travelling in the 'transit' mode. In particular, the location of sweeping equipment and operator accommodation at the front of articulated machines likens its behaviour to that of a solely rear-steered vehicle, which configuration presents a good situation for cleaning around outer curved perimeters but presents the furthest away from a normal 'transit' mode when manoeuvring amongst normal traffic flow as previously described. In contrast, sweeping machines using solely front-wheel steering are similar to other vehicles sharing the road and thus behave in a similar manner when making turns.

To try to solve this problem, WO-A-91/19048 discloses a self-propelled driver-operated cleaning vehicle, which has a low speed cleaning mode and a high speed transit mode. Rear wheel steering is provided which varies with vehicle speed, and which is reduced to zero when the vehicle changes to the transit mode.

US-A-5111901 discloses a generic hydraulic steering system with a two-wheel steering and a four-wheel steering mode. In the two-wheel steering mode, the non-steered wheels are locked at a zero steering angle.

It is an object of the invention to improve this system.

According to a first aspect of the present invention there is provided a hydraulic steering system for a machine having a longitudinal axis, comprising:
a first steering axis having a first set of wheels; and
a second steering axis having a second set of wheels, the second set of wheels being operable to be locked at a steering angle of substantially zero degrees relative to the longitudinal axis of the machine; characterised in that
a control unit is configured to monitor the orientation of the second set of wheels when locked at the steering angle of substantially zero degrees relative to the longitudinal axis of the machine and to correct deviation of the second set of wheels from said orientation.

Preferably, the control unit is configured to correct the steering angle of the second set of wheels when the speed of the vehicle is below a first predetermined threshold value.

Preferably, the control unit is configured to correct the steering angle of the second set of wheels when the steering angle of the first set of wheels is within a predetermined range.

According to a second aspect of the present invention there is provided a method of operating a hydraulic steering system having a first steering axis having a first set of wheels and a second steering axis having a second set of wheels, the second set of wheels being operable to be locked at a steering angle of substantially zero degrees relative to a longitudinal axis of the machine, the method comprising the steps of:
monitoring the orientation of the second set of wheels when locked at the steering angle of substantially zero degrees relative to the longitudinal axis of the machine; and
correcting deviation of the second set of wheels from said orientation.

Preferably, the method further comprises the step of determining when the speed of the vehicle is below a first predetermined threshold value. Preferably, the correcting step is carried out when the speed of the vehicle is below the first predetermined threshold value.

Preferably, the method further comprises the step of determining when the steering angle of the first set of wheels is within a predetermined range. Preferably, the correcting step is carried out when the steering angle of the first set of wheels is within the predetermined range.

An advantage of the present invention is that the orientation of the rear wheels is constantly monitored and recalibrated if required. Hydraulic systems are subject to leakages, for example across spools and over piston seals, especially as wear is introduced to the system. Such leakage could lead to 'drift' of the rear wheels. The rear wheels are thus constantly monitored for deviation from the straight ahead orientation (i.e. approximately parallel to, or at an angle of zero degrees relative to, a longitudinal axis of the machine). When a maximum permissible deviation is exceeded, a series of safety checks are carried out and if all are met then a steering correction system is engaged to return the rear wheels to the desired orientation, i.e. straight ahead.

An advantage of only carrying out the correction of the rear wheels whilst the front wheels are close to the straight ahead orientation (e.g. ±5°), i.e. whilst very close to straight-line driving, is that it minimises any operator perceptible motion of the machine which is contrary to the desired direction changes fed into the system by adjustment by the operator to a steering hand-wheel. Furthermore, the steering correction system is automatic and, as such, requires no operator input, nor operator perception that the correction is being carried out.

An additional advantage of the invention is the retention of the benefits of front-wheel steering and hence manoeuvring behaviour when in the 'transit' mode, combined with the benefits of an additional rear-wheel steering function that is only operational in the 'work' mode to improve the cleaning path around smaller curved perimeters.

Furthermore, the switching of the steering function between front-wheel and four-wheel steering is automatically part of the 'transit' and 'work' mode selection respectively, and occurs as a seamless process in the operation of the machine as the operator switches between these two modes.

One exemplary embodiment of a steering system of the present invention is as described with reference to, and as shown in the accompanying drawings, in which:
Figure 1 is a perspective view of a typical prior art sweeping machine;
Figure 2 is a flow chart showing the switch from two-wheel steering to four-wheel steering;
Figure 3 is a flow chart showing the switch from four-wheel steering to two-wheel steering;
Figure 4 is a flow chart showing a rear steering correction system which can be applied during two-wheel steering;
Figure 5 is a flow chart showing an error condition test which may be applied during both two-wheel steering and four-wheel steering;
Figure 6 is an example hydraulic schematic for use with the present invention;
Figure 7 is the hydraulic schematic of Figure 6 in a two-wheel steer left state;
Figure 8 is the hydraulic schematic of Figure 6 in a two-wheel steer right state;
Figure 9 is the hydraulic schematic of Figure 6 in a four-wheel steer left state;
Figure 10 is the hydraulic schematic of Figure 6 in a four-wheel steer right state;
Figure 11 is the hydraulic schematic of Figure 6 in a correction-left steer left state;
Figure 12 is the hydraulic schematic of Figure 6 in a correction-left steer right state;
Figure 13 is the hydraulic schematic of Figure 6 in a correction-right steer left state;
Figure 14 is the hydraulic schematic of Figure 6 in a correction-right steer right state;
Figure 15 is a perspective view showing the insertion of a motor into a gimbal apparatus for use with the present invention;
Figure 16 is a perspective view showing the motor loaded into position in the gimbal apparatus of Figure 15;
Figure 17 is a rotated view of Figure 16 showing the steering axis;
Figure 18 is a diagram showing kerb-to-kerb turning comparisons between a prior art machine and a machine comprising the present invention;
Figure 19 is a diagram showing wall-to-wall turning comparisons between a prior art machine and a machine comprising the present invention; and
Figure 20 is a diagram showing outside corner sweeping comparisons between a prior art machine and a machine comprising the present invention.

Figure 1 illustrates a prior art four-wheeled road cleaning machine 10 in the form of a driver operated vehicle having a front axle and corresponding wheels 11 and a rear axle and corresponding wheels 12. An operator control station 13 is located towards the front of the vehicle, under which there is provided cleaning equipment, such as cleaning brushes 14 and debris collection means 15. Although reference is made to a front and a rear axle in the illustrated embodiments, the front and rear wheels 12 may also be mounted on an independent front and rear suspension, having two separate motors. In this case, the "axle" refers to the "axis" which extends from the centre of one of the pairs of wheels to the centre of the other of the pairs of wheels.

In accordance with the present disclosure, each of the front axle 11 and the rear axle 12 has a predetermined maximum degree of articulation, with the front axle 11 having a larger maximum degree of articulation than the rear axle 12. Each of the front and rear axles' 11, 12 predetermined maximum degree of articulation is dictated by the maximum space available for rotation of its wheels. The location of the engine and suspension is typically at the rear of road cleaning machines 10, and therefore the maximum degree of articulation of the rear axle 12 is more limited than that of the front axle 11. For example, the front axle 11 may have 30° to 60° articulation, while the rear axle 12 may have 10° to 25° articulation.

The machine 10 has two selectable modes of operation: a 'work' mode and a 'transit' mode. In the 'transit' mode, only two-wheel steering is available, in the form of front-wheel steering. However, when the 'work' mode is selected, the additional rear-wheel steering function comes into operation such that four-wheel steering is enabled and both the front axle 11 and the rear axle 12 steer in opposite directions in proportional movements (e.g. with a ratio between the front axle 11 and the rear axle 12 of 1:1, 2:1, 3:1, or any other suitable ratio), up to the maximum degree of articulation of the rear axle 12. In the case of the previous example, this is up to 20° articulation of the rear axle 12. Thereafter, the rear axle 12 maintains its maximum degree of articulation, but the front axle 11 can be articulated further up to its maximum degree of articulation. In the case of the previous example, the rear axle 12 may maintain its maximum degree of articulation of 20°, while the front axle 11 may be articulated up to 60° articulation, similar to the articulation of the prior art machine. When 'straightening-up' the reverse happens, such that once the front axle 11 has reverted from a higher degree of articulation to its proportional angle of articulation corresponding to the degree of articulation of the rear axle 12, then both the front 11 and rear 12 axles straighten-up proportionally. This method of 'straightening up' is preferable to resuming the proportional steering between the front axle 11 and the rear axle 12 when the front axle 11 has reverted from a higher degree of articulation to its proportional angle of articulation corresponding to the maximum degree of articulation of the rear axle 12, because such a method could result in divergence between the steering of the front axle 11 and the rear axle 12 if the rear axle 12 has been locked at an angle which is not its exact maximum steering angle (e.g. if it was locked at ±2° from its maximum steering angle).

One or more sensors may be provided on each of the front and rear axles 11, 12 to measure the angular displacement of the axles 11, 12. The sensors may be no-contact or no-contact/non-contact rotary position sensors.

Mode and subsequent steering function control is such that operator selection to the 'transit' mode is only possible from the 'work' mode, and vice versa, when the steering is aligned into the 'straight-ahead' position and with the machine travelling at speeds within the allowable range for the 'work' mode, for example less than 15 km/hr. In the 'transit' mode, the rear steering axle is automatically locked/retained in the 'straight-ahead' position. Mode control is pre-selectable such that mode switching performs automatically once the steering is in the 'straight-ahead' position and speed is below the predetermined threshold level for the 'work' mode, for example 15 km/hr.

The control and interlocking of the various functions are activated electronically with an operator visual display means showing mode section and real time positional movement of both steering axles 11,12 and the status of mode switching.

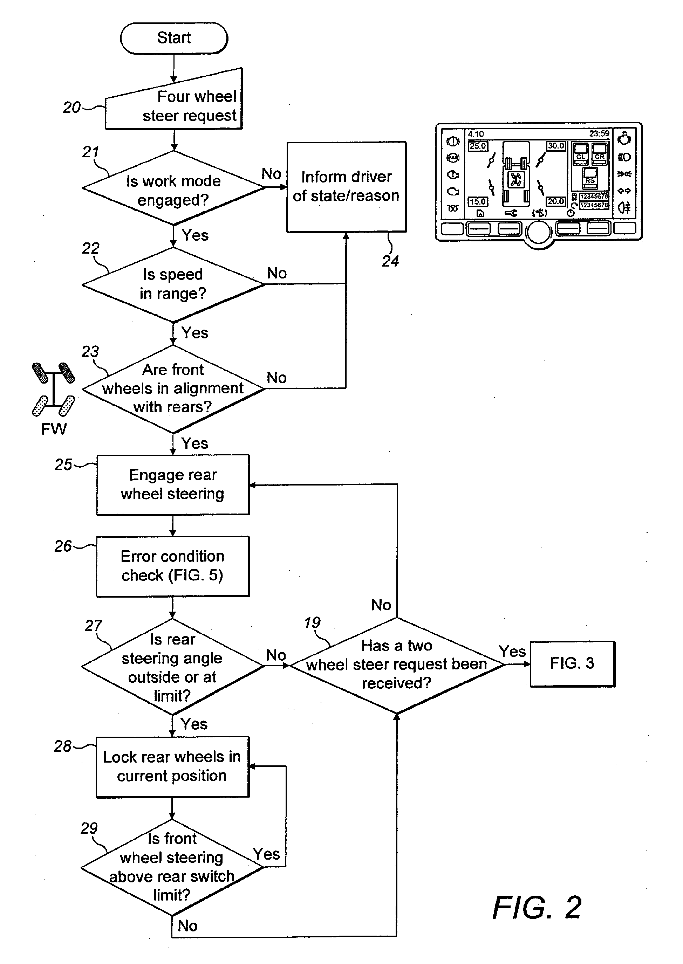

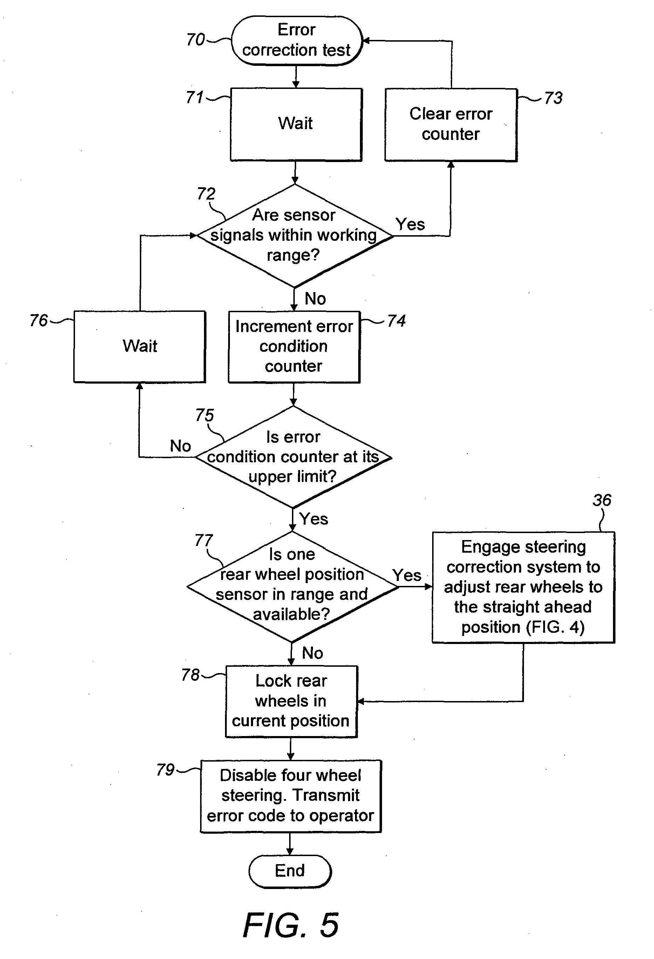

Figure 2 is a flow chart illustrating the switch from two-wheel steering to four-wheel steering, i.e. from the 'transit' mode to the 'work' mode. Initially, a request for the 'work' mode is effected by the operator of the machine 10, for example by actuating a switch. The request for the 'work' mode automatically instigates a request from a control unit for four-wheel steering 20. Before the request can be effected, three checks may be made by the control unit: first, it is checked whether the 'work' mode is selected 21; second, it is checked whether the vehicle's speed is in the correct range for the 'work' mode 22; lastly, it is checked whether the front wheels 11 are in alignment with the rear wheels 12 23 (i.e. approximately parallel to, or at an angle of zero degrees relative to, a longitudinal axis of the machine 10). The system provides automatic validation in that the switching is performed when the alignment of the front and rear wheels 12 agree. Thus, for example, if the proportional steering ratio between the front axle 11 and the rear axle 12 is 2:1, then if the rear wheels 12 are misaligned at a 1° left steering angle, the switching will only occur when the front wheels 11 are at a 2° right steering angle. If any of these conditions is not met, the driver is informed 24, for example by means of a message displayed on a user interface. Conversely, if all three conditions are met, then the rear axle 12 is engaged 25. At this stage, an error condition check is carried out 26, as described below in relation to Figure 5. As long as the steering request is within the limit of the maximum rear axle 12 articulation, the front and rear axles 11, 12 steer proportionately. However, if the steering request is outside the limit of the maximum rear axle articulation 27, then the rear axle 12 is locked at substantially its maximum articulation 28, while the front axle 11 may continue to articulate up to its maximum degree of articulation. If at any point the steering request drops below the maximum degree of articulation of the rear axle 12 29, and a request for two-wheel steering has not been received 19, then the rear-wheel steering is re-engaged.

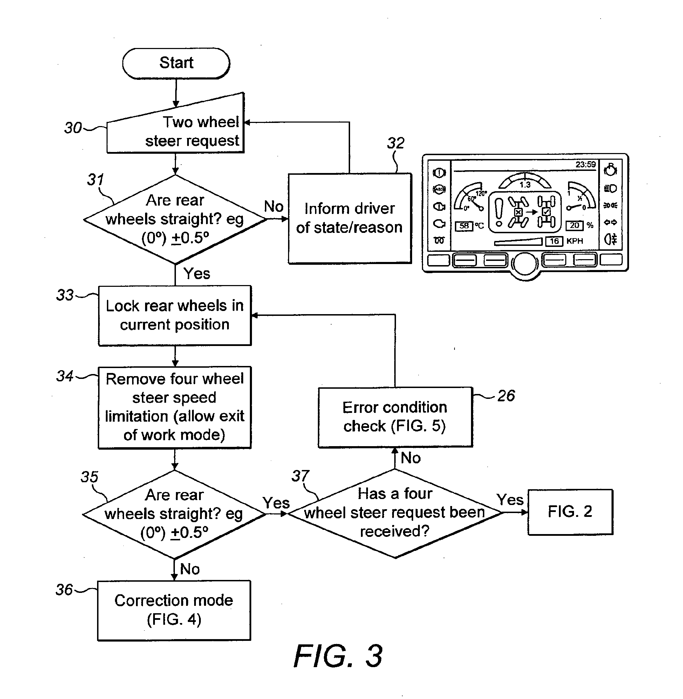

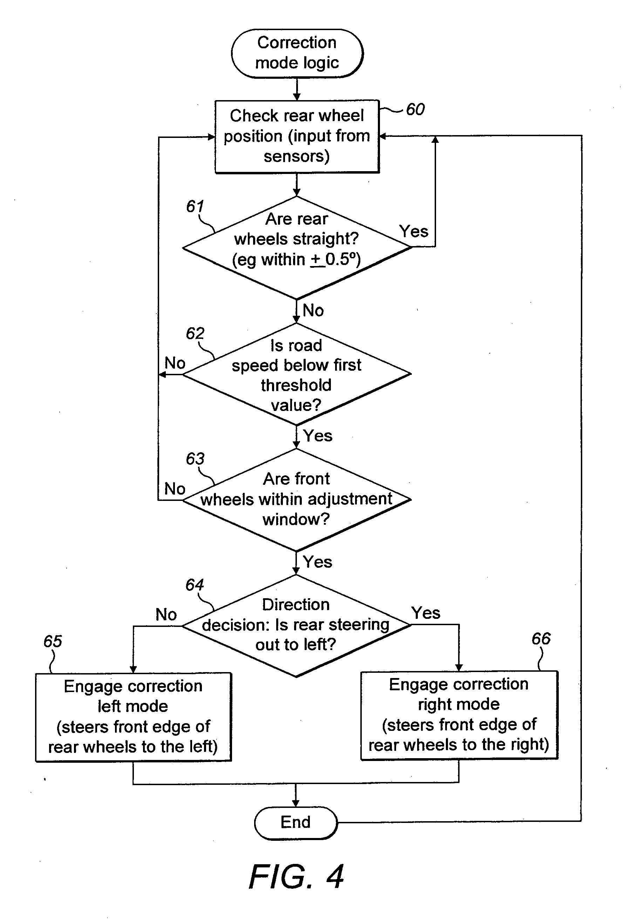

The flow chart of Figure 3 illustrates the switch from four-wheel steering to two-wheel steering, i.e. generally from the 'work' mode to the 'transit' mode. Initially, a request for two-wheel steering is made 30. The request can be made in one of two ways: a request for the 'transit' mode may be effected by the operator of the machine 10, for example by actuating a switch, such request automatically instigating a request from the control unit for two-wheel steering 30; alternatively, the operator of the machine 10 may actively select two-wheel steering while in the 'work' mode, for example by using a switch to manually override the automatic selection of four-wheel steering in the 'work' mode. Following the request 30 for two-wheel steering, the control unit checks whether the rear wheels 12 are straight (i.e. approximately parallel to, or at an angle of zero degrees relative to, a longitudinal axis of the machine 10) 31. If any of these conditions is not met, the driver is informed 32, for example by means of a message displayed on a user interface. Conversely, if all three conditions are met, then the rear axle is locked in its current position (substantially straight, but may for example be ±2°) 33, and the speed limitation associated with the 'work' mode is removed 34. While the machine 10 is in the 'transit' mode, the rear-axle 12 is continually monitored by the control unit to check that the rear wheels 12 are straight 35, for example by means of angular displacement sensors on one or both of the rear wheels 12. If the control unit determines that the rear wheels 12 are not straight, active correction is engaged via a steering correction system 36, as described below in relation to Figure 4. Following the steering correction system 36, or if the control unit determines that the rear wheels 12 are straight, it is checked whether a request for four-wheel steering has been received 37. If this is not the case, an error condition check is carried out 26, as described below in relation to Figure 5, and the system returns to the stage of locking the rear wheels 12 in position 33. The continual monitoring of the alignment of the rear wheels 12 when the machine 10 is in the 'transit' mode provides a safety mechanism to ensure that four-wheel steering is restricted to the lower machine speeds associated with the 'work' mode.

Hydraulic systems are subject to leakages, for example across spools and over piston seals, especially as wear is introduced to the system. Such leakage could lead to 'drift' of the rear wheels 12. The rear wheels 12 are thus constantly monitored for deviation from the straight ahead orientation (i.e. approximately parallel to, or at an angle of zero degrees relative to, a longitudinal axis of the machine 10). When a maximum permissible deviation is exceeded, a series of safety checks are carried out and if all are met then a steering correction system is engaged to return the rear wheels 12 to the desired orientation, i.e. straight ahead.

Figure 4 is a flow chart illustrating the steering correction system 36, which comprises a control methodology for the application of an automatic correction function to monitor the rear axle 12 and allow for the correction of any deviation from the straight ahead position by means of realigning the rear axle 12 in a safe and controlled manner. The system continually checks the position of rear wheels 12 60, for example by means of a position sensor, which could be of no-contact type, mounted on the rear axle 12. Feedback from the position check 60 is analysed to determined whether the rear wheels 12 are within an acceptable straight ahead position, which could for example be within ±0.5° from the straight ahead orientation 61. If the wheels are still within this range then the system begins the checking process again by repeating the position check 60. However, if the rear wheels 12 are out of alignment then it is checked whether the road speed of the vehicle is below an acceptable predetermined threshold value to begin correction 62. The acceptable predetermined threshold value is determined based on safety and operator perception, and may for example be 30km/h. If this is not the case then the system begins the checking process again by returning to the position check 60. However, if the road speed is below the acceptable limit, then the front axle 12 is examined, for example by means of wheel position sensors, to determine whether it is within an acceptable range, which could for example be ±5° from the straight ahead orientation 63. If the front wheels 11 are not within this range, then the check sequence is started again by returning to the position check 60. If the front wheels 11 are within the required range, then all safety checks are satisfied and the system checks in which direction correction is required 64. If the leading edge of the rear wheels 12 is deemed to be out of alignment to the right then correction-left mode is engaged 65. If the leading edge of the rear wheels 12 is deemed to be out of alignment to the left, then the correction-right mode is engaged 66.

The correction of the rear wheels 12 is only carried out whilst the front wheels 11 are close to the straight ahead orientation 63 (e.g. ±5°), i.e. whilst very close to straight-line driving, in order to minimise any operator perceptible motion of the machine which is contrary to the desired direction changes fed into the system by the operator by adjustment to a steering hand-wheel. The steering correction system 36 is automatic and, as such, requires no operator input, nor does it result in operator perception that the correction is being carried out.

Figure 5 is a flow chart illustrating the error condition check 26, which is continually carried out to test for faults and to limit false positive results. After initiation 70 of the error condition check 26, there is a wait- time 71 (e.g. 300ms) to reduce the possibility of electromagnetic interference or other 'noise' on the signal line being interpreted as an error signal condition. It is then checked whether the sensor signals are within the working range 72, which is pre-defined as S_{vF} for the front signal range and S_{vR} for the rear signal range. If the signal received from the sensors are all within the acceptable ranges, then an error counter is reset to zero 73. The error counter is employed in order to further reduce the possibility of electromagnetic interference or other 'noise' on the signal line being interpreted as an error signal condition, by enabling the validation of multiple error signals in sequence. However, if the signals received are outside of the acceptable ranges, then the error condition counter is incremented by one 74, and it is checked whether the error counter has reached its upper predetermined limit 75, e.g. a value of 125. If the upper limit of the error counter has not been met, a sequential error condition is tested by pausing for a time delay of e.g. 8ms to ensure that the error is present and is not erroneous, after which the sensor signals are tested again 72. However, if the upper limit of the error counter has been met, it is tested whether there is one rear wheel position sensor signal available and deemed to be working correctly, i.e. within a predetermined range 77. If one rear wheel position sensor is available, then it is possible to adjust the rear wheels 12 to the straight ahead position, and for the vehicle to continue working as a two-wheel steer vehicle only. To achieve this, the steering correction system 36 is engaged to steer the rear wheels 12 to the straight ahead orientation, in which orientation they are locked 78. However, if there is no rear wheel position sensor available (functioning within predetermined parameters), then the rear wheels 12 must immediately be locked in their current position. This is because there is no way to accurately know at what steering angles the rear wheels 12 are currently set, and thus there is no known starting boundary condition from which to conduct a correction procedure. Since no rear wheels 12 position signal is available, the steering angle of the rear axle 12 cannot be known, and therefore four-wheel steering cannot continue to operate safely. Thus the four-wheel steering mode is disabled and feedback is displayed to the operator explaining the condition 79.

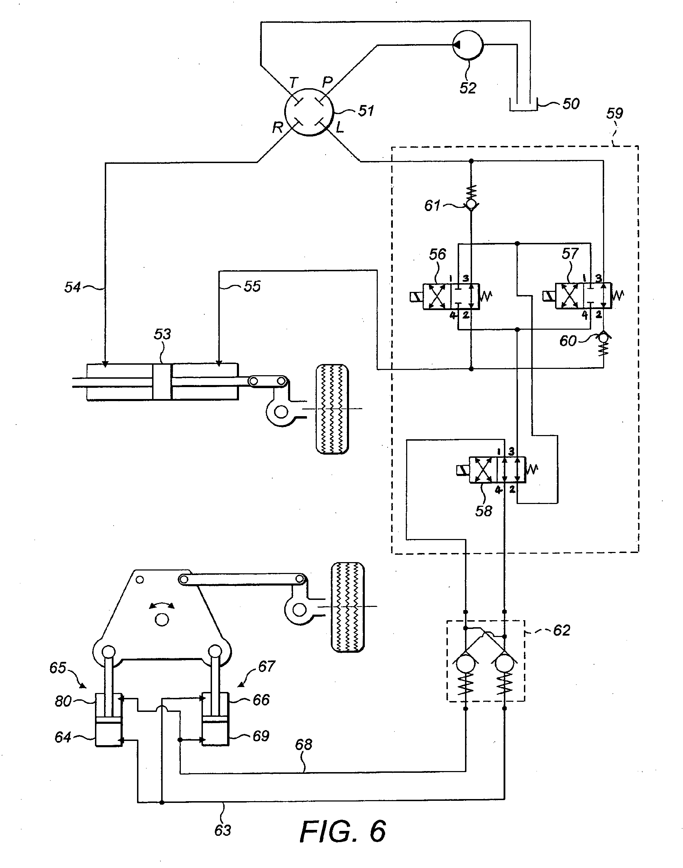

Figure 6 shows an example hydraulic circuit which may be used to effect the present invention. Hydraulic fluid from a tank 50 is directed to an orbital steering unit 51 by a pump 52, which may be a unidirectional fixed displacement hydraulic pump. From the orbital steering unit, the fluid may pass to a front axle double-acting cylinder 53 via a steer-right line 54 or a steer-left line 55.

Three valves must be engaged to enable the rear wheels 12 to steer in both directions for four-wheel steering: a 'correction-left' valve 56, a 'correction-right' valve 57, and a 'rear steer' valve 58. The three valves 56,57,58 are preferably four-way, two-position, direct acting, spool type, screw-in cartridge solenoid valves. The correction-left valve 56 and correction-right valve 57 in the energised position have port 3 open to port 4 and port 2 open to port 1, while in the de-energised position flow is allowed between port 2 and port 3 (and vice versa) while port 1 and port 4 are blocked. The rear-steer valve 58 in the energised position allows flow from port 3 to port 4 (and vice versa) and from port 2 to port 1 (and vice versa), while in the de-energised position allows flow from port 2 to port 3 (and vice versa) and from port 4 to port 1 (and vice versa). The three valves 56,57,58 are housed in a steering valve block 59. Alternatively, when the steering correction system 36 is engaged, either the correction-left valve 56 or the correction-right valve 57 can be energised in conjunction with the rear steer valve 58 to only steer the rear wheels 12 in one direction (left or right respectively). This is provided for two reasons. Firstly, from a safety aspect it would require two valve failures for the rear wheels 12 to start steering when not expected. Secondly, for correction purposes the rear steering is only switched on and off and does not control or meter the input to the system, as this is performed by the vehicle operator input on the handwheel. Thus, in the situation where the operator is "sawing" or oscillating the handwheel the output could be controlled to steer in one direction only to correct the rear wheels 12.

To implement the steering correction system 36 safely, there must be a method of ensuring that the degree of articulation of the rear wheels 12 is not affected by external forces transferred into the system, for example by virtue of motion of the vehicle 10 around a corner. When steering correction 36 is engaged, the pressure developed by the input road forces on the hydraulic system may be greater than the pressure used to implement a correction of the rear steering direction. In order to overcome such road input forces, a pilot operated check valve 62 is located in a rear-steer-left line 63 and a rear-steer-right line 68. The pilot operated check valve 62 requires a pilot pressure from the side where the steering effort has been initiated in order to lift a check valve off its seat and thereby allow the return of hydraulic fluid through the lines. This has the effect of only allowing a steering angle change of the rear wheels 12 to occur when initiated from the control side of the system.

There are eight distinct steering modes of operation for the system, which will now be described.

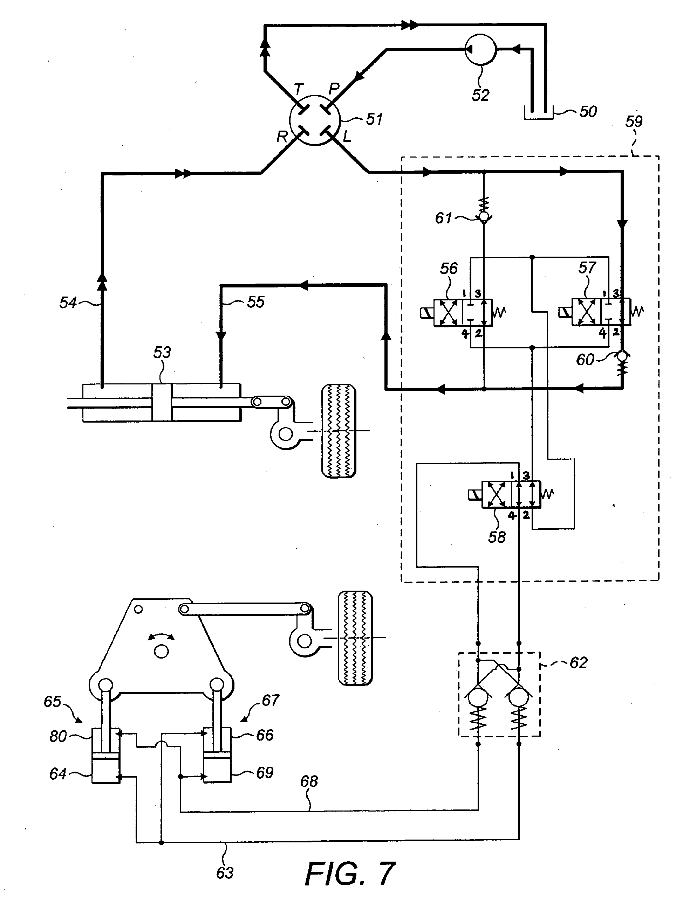

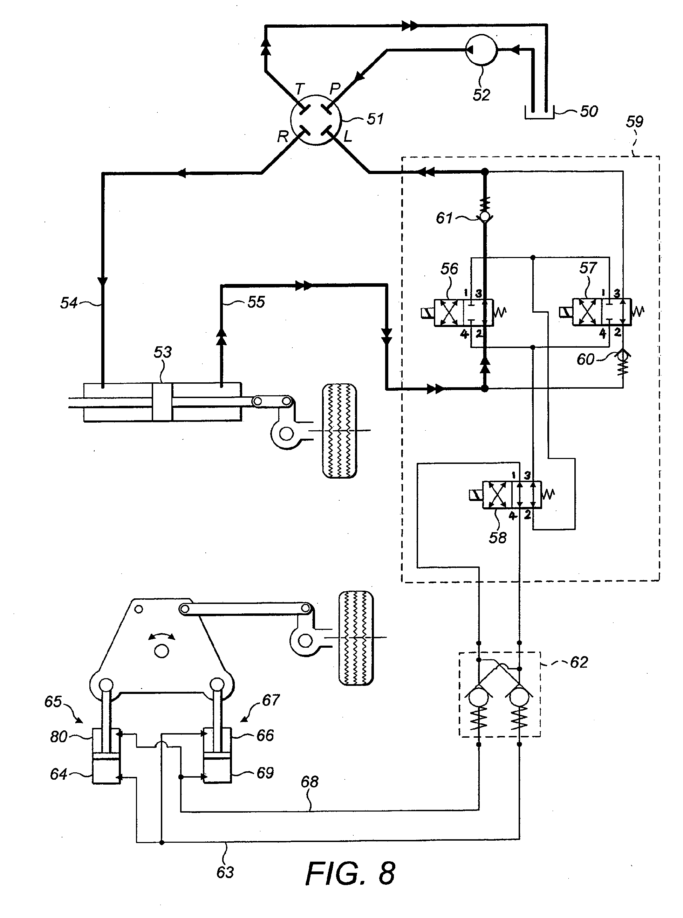

The first two modes of operation are steering left and right via two-wheel steering. In these modes, none of the correction-left valve 56, the correction-right valve 57, nor the rear-steer valve 58 is energised. When steering left (Figure 7), hydraulic fluid flows from the orbital steering unit 51, through the correction-right valve 57, a first check valve 60, and the steer-left line 55 into the front axle cylinder 53, which turns the leading edge of the wheels mounted on the front axle 11 to the left. This causes hydraulic fluid to be displaced from the front axle cylinder 53 through the steer-right line 54 and the orbital steering unit 51 back into the tank 50. When steering right (Figure 8), hydraulic fluid from the orbital steering unit flows directly through the steer-right line 54 into the front axle cylinder 53, which turns the leading edge of the wheels mounted on the front axle 11 to the right. This causes hydraulic fluid to be displaced from the front axle cylinder 53 through the steer-left line 55, the correction-left valve 56, a second check valve 61, and the orbital steering unit 51 back to the tank 50.

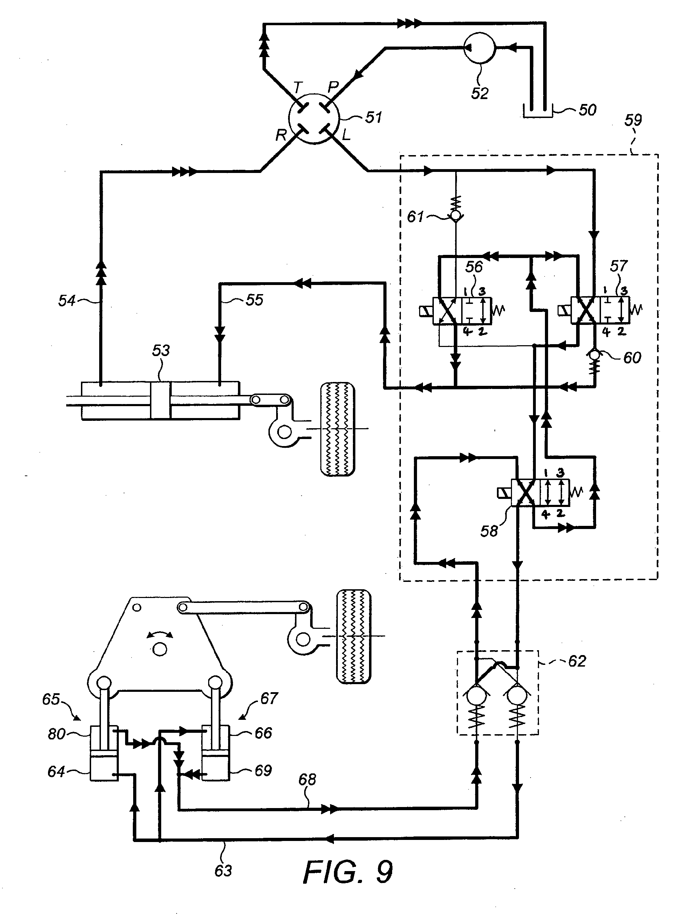

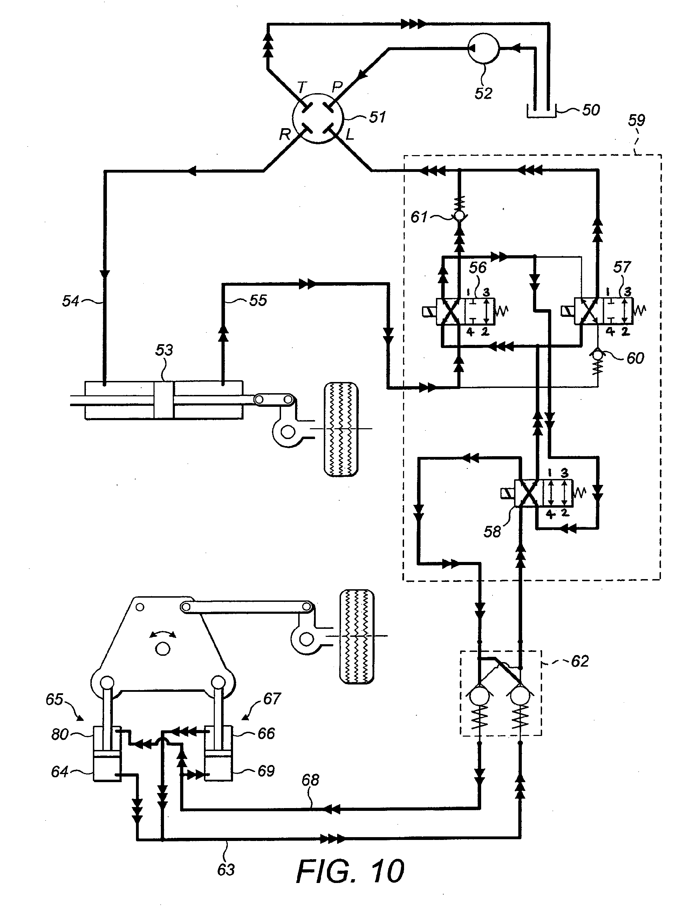

The second two modes of operation are steering left and right via four-wheel steering. In these modes, the correction-left valve 56, the correction-right valve 57, and the rear-steer valve 68 are all energised. When steering left (Figure 9), hydraulic fluid flows form the orbital steering unit 51, through the correction-right valve 57 and the rear steer valve 58, then through a pilot operated check valve 62 to a rear-steer-left line 63, which directs hydraulic fluid to the piston side 64 of a left rear cylinder 65 and the annular side 66 of a right rear cylinder 67; this has the effect of steering the leading edge of the rear wheels 12 to the right. Hydraulic fluid is thereby displaced from the left rear cylinder 65 and the right rear cylinder 67 into a rear-steer-right line 68, through the pilot operated check valve 62, the rear steer valve 58, both the correction-left and correction-right valves 56,57, and the steer-left line 55 into the front axle cylinder 53, which turns the leading edge of the wheels mounted on the front axle 11 to the left. This causes hydraulic fluid to be displaced from the front axle cylinder 53 through the steer-right line 54 and the orbital steering unit 51 back into the tank 50. When steering right (Figure 10), hydraulic fluid from the orbital steering unit flows directly through the steer-right line 54 into the front axle cylinder 53, which turns the leading edge of the wheels mounted on the front axle 11 to the right. This causes hydraulic fluid to be displaced from the front axle cylinder 53 through the steer-left line 55, the correction-left valve 56 (there is no pressure differential for fluid to pass through the correction-right valve 57), the rear steer valve 58, and the pilot operated check valve 62 to the rear-steer-right line 68, which directs hydraulic fluid to the piston side 64 of the right rear cylinder 67 and the annular side 80 of the left rear cylinder 65; this has the effect of steering the leading edge of the rear wheels 12 to the left. Hydraulic fluid is thereby displaced from the left rear cylinder 65 and the right rear cylinder 67 into the rear-steer-left line 63, through the pilot operated check valve 62, the rear steer valve 58, the correction-right valve 57 or the correction-left valve 56 and the second check valve 61, and through the orbital steering unit 51 back into the tank 50.

The final four modes of operation comprise two correction-left modes, in which the leading edge of the rear wheels 12 are adjusted to the left, and two correction-right modes, in which the leading edge of the rear wheels 12 are adjusted to the right. The correction-left and right modes can only be effected during two-wheel steering.

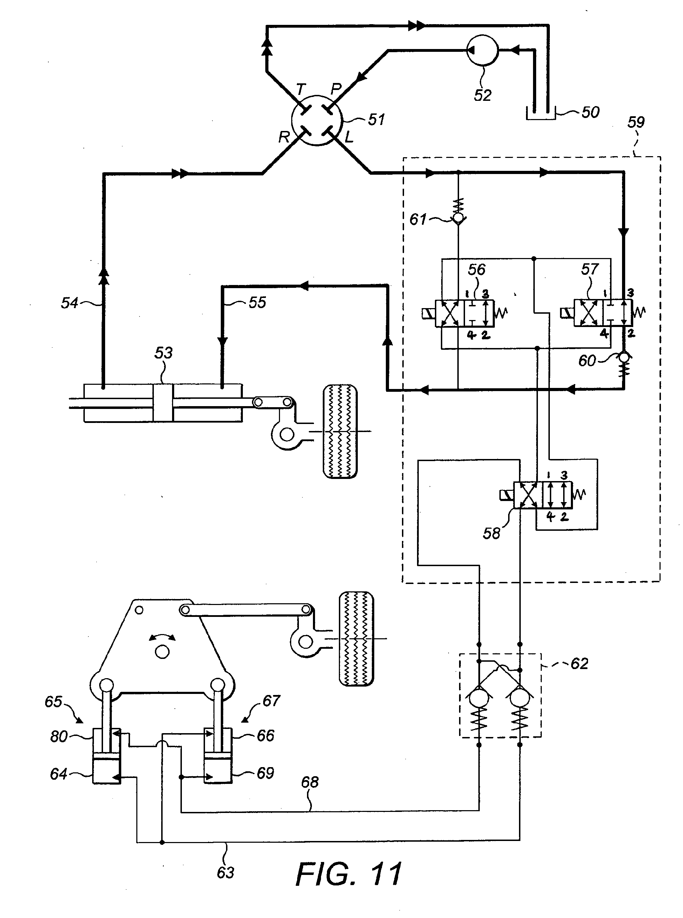

In the correction-left mode, the correction-left valve 56 and the rear-steer valve 58 are energised, and the correction-right valve 57 is not energised. When steering left in the correction-left mode (Figure 11), hydraulic fluid flows form the orbital steering unit 51, through the correction-right valve 57 and a first check valve 60, and through the steer-left line 55 into the front axle cylinder 53, which turns the leading edge of the wheels mounted on the front axle 11 to the left. This causes hydraulic fluid to be displaced from the front axle cylinder 53 through the steer-right line 54 and the orbital steering unit 51 back into the tank 50. Thus the outcome is a two-wheel steer mode only, with no correction to the rear wheels 12.

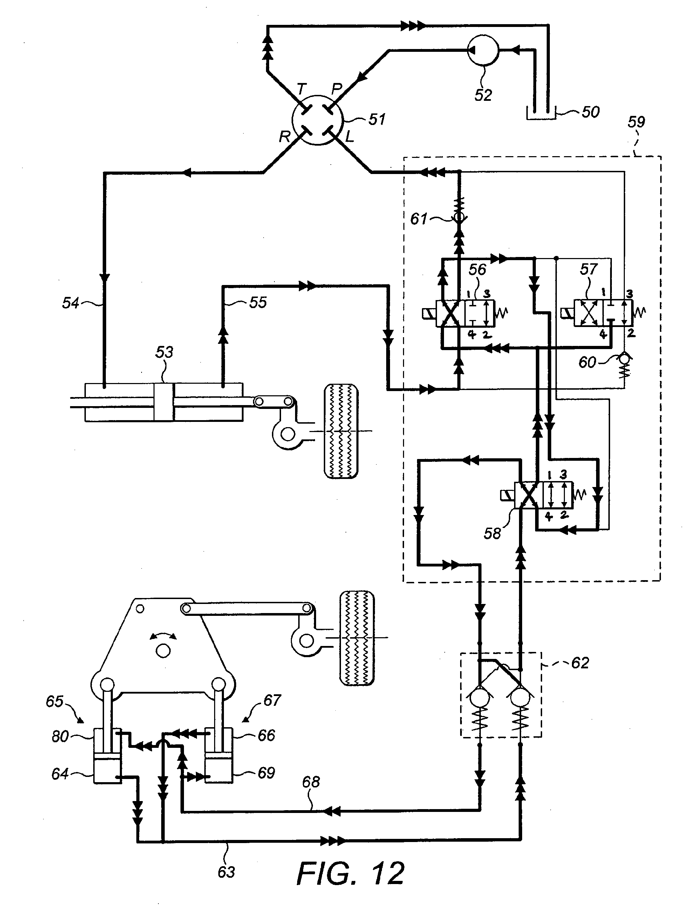

When steering right in the correction-left mode (Figure 12), hydraulic fluid from the orbital steering unit flows directly through the steer-right line 54 into the front axle cylinder 53, which turns the leading edge of the wheels mounted on the front axle 11 to the right. This causes hydraulic fluid to be displaced from the front axle cylinder 53 through the steer-left line 55, the correction-left valve 56, the rear steer valve 58, and the pilot operated check valve 62 to the rear-steer-right line 68, which directs hydraulic fluid to the piston side 64 of the right rear cylinder 67 and the annular side 80 of the left rear cylinder 65; this has the effect of steering the leading edge of the rear wheels 12 to the left. Hydraulic fluid is thereby displaced from the left rear cylinder 65 and the right rear cylinder 67 into the rear-steer-left line 63, through the pilot operated check valve 62, the rear steer valve 58, the correction-left valve 56 only and the second check valve 61, through the orbital steering unit 51 back into the tank 50. The outcome is the enablement of a four-wheel steer mode adjustment of the rear wheels 12 towards the left.

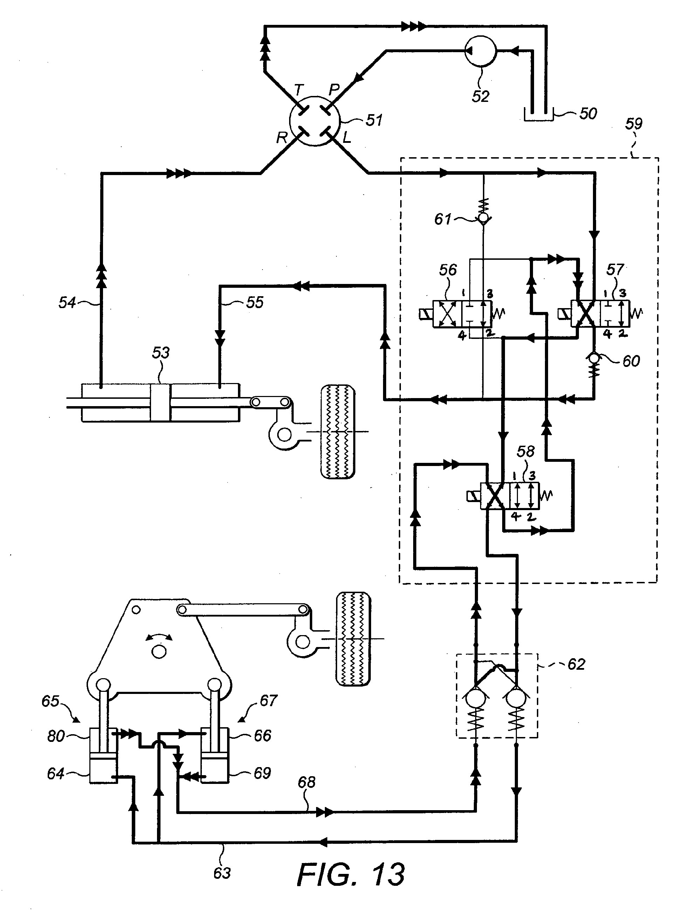

In the correction-right mode, the correction-left valve 56 is not energised, and the correction-right valve 57 and the rear-steer valve 58 are energised. When steering left in the correction-right mode (Figure 13), hydraulic fluid flows from the orbital steering unit 51, through the correction-right valve 57 and the rear steer valve 58, then through the pilot operated check valve 62 to the rear-steer-left line 63, which directs hydraulic fluid to the piston side 64 of the left rear cylinder 65 and the annular side 66 of the right rear cylinder 67; this has the effect of steering the leading edge of the rear wheels 12 to the right. Hydraulic fluid is thereby displaced from the left rear cylinder 65 and the right rear cylinder 67 into a rear-steer-right line 68, through the pilot operated check valve 62, the rear steer valve 58, the correction-right valve 57, and the steer-left line 55 into the front axle cylinder 53, which turns the leading edge of the wheels mounted on the front axle 11 to the left. This causes hydraulic fluid to be displaced from the front axle cylinder 53 through the steer-right line 54 and the orbital steering unit 51 back into the tank 50. The outcome is the enablement of a four-wheel steer mode adjustment of the rear wheels 12 towards the right.

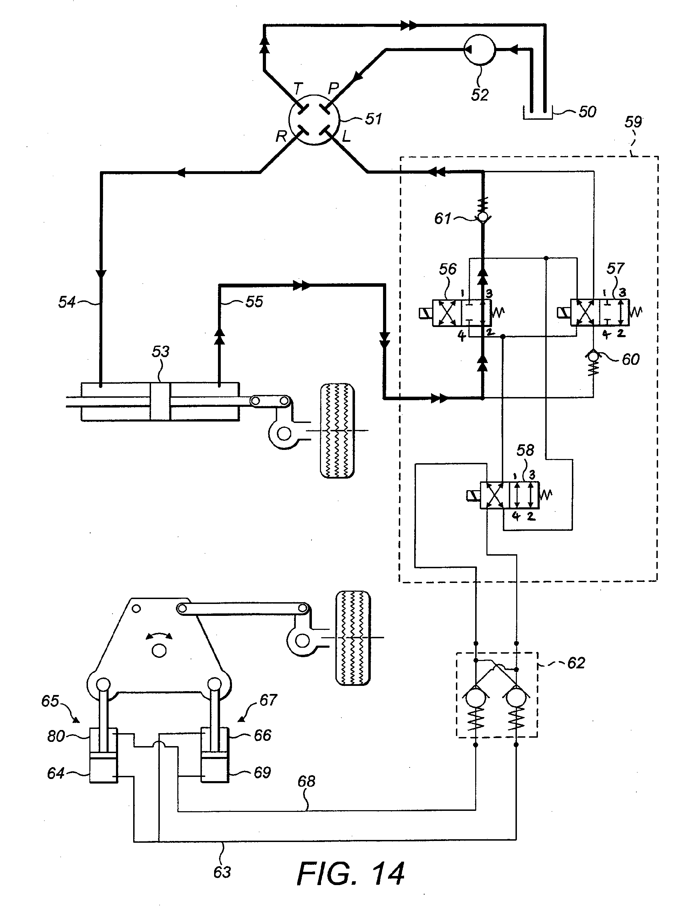

When steering right in the correction-right mode (Figure 14), hydraulic fluid from the orbital steering unit flows directly through the steer-right line 54 into the front axle cylinder 53, which turns the leading edge of the wheels mounted on the front axle 11 to the right. This causes hydraulic fluid to be displaced from the front axle cylinder 53 through the steer-left line 55, the correction-left valve 56, a second check valve 61, and the orbital steering unit 51 back to the tank 50. Thus the outcome is a two-wheel steer mode only, with no correction to the rear wheels 12.

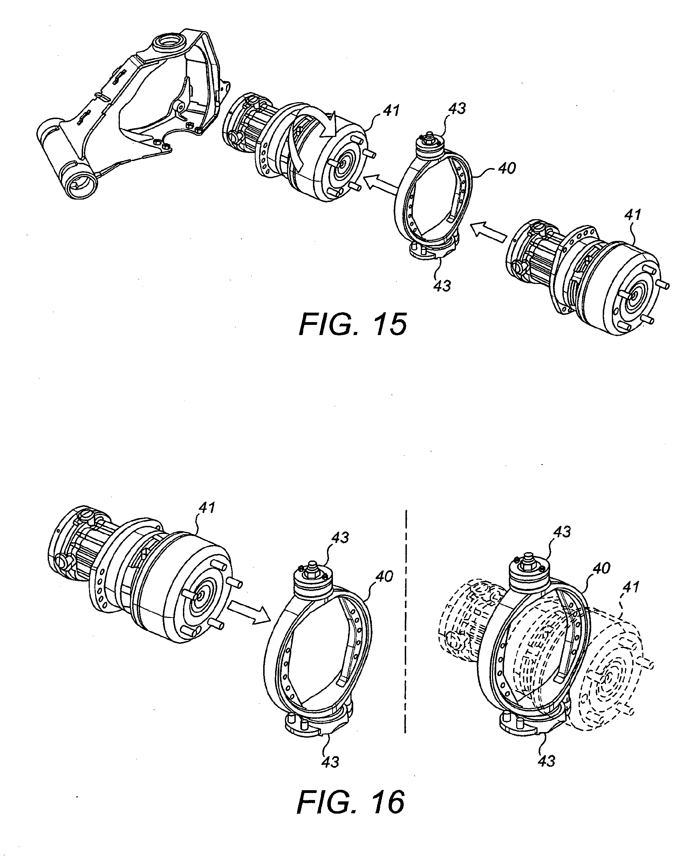

Figure 15 illustrates a gimbal apparatus 40 for use on the rear axles of the present invention. A hydraulic wheel motor 41 is employed on each rear wheel of the present invention, and is allowed to pivot about a steering axis 42 by application of a housing in the form of the gimbal 40, which is suspended at opposing ends a bearing arrangement 43. The gimbal apparatus 40 thereby enables the articulation of a flange faced fixed hydraulic wheel motor 41. A hydraulic hose links each of the motors 41 to a hydraulic pump, which drives the motors. This arrangement is significantly more compact than a conventional steering axle arrangement comprising a single axle which powers both wheels.

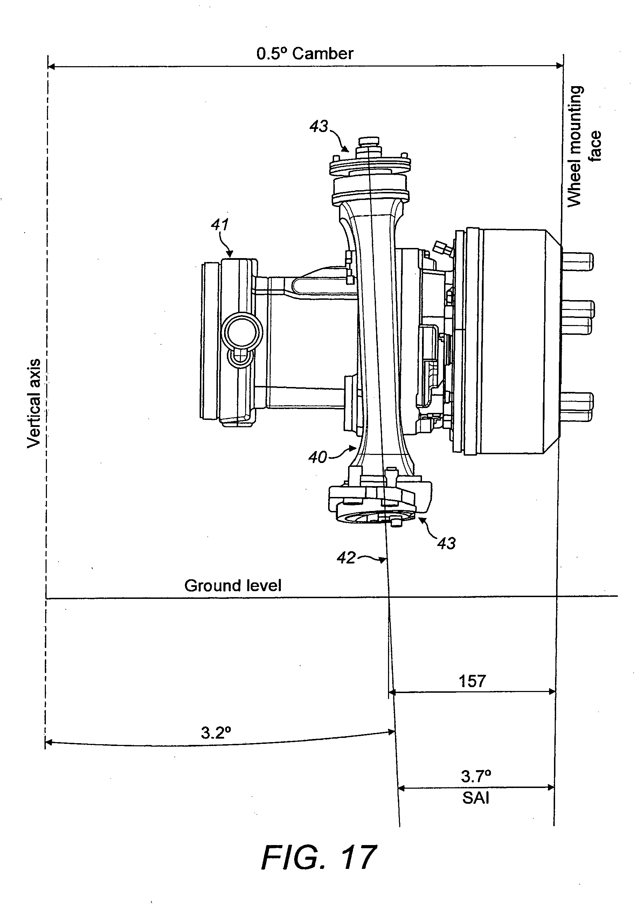

The wheel motors 41 are inserted through the gimbal apparatus 40 from the outside of the vehicle, rotated through 90° and pulled back toward the mating face on the inside of the gimbal 40, as is illustrated in Figure 15 and Figure 16. This arrangement enables the steering axis 42 to be brought closer to the hub mounting face, whilst also enabling a steering axis inclination (the angle between the steering axis and the vertical) of 3-5° to be achieved (see Figure 17). The gimbal apparatus 40 and the wheels (not shown) are configured such that the steering axis 42 and the camber line (the axis passing through the centre of the tyre and wheel, perpendicular to its spin axis) intersect below the road surface, resulting in a positive scrub radius. This has the advantage that the tyre rolls as the wheel is steered, which reduces the force required for steering.

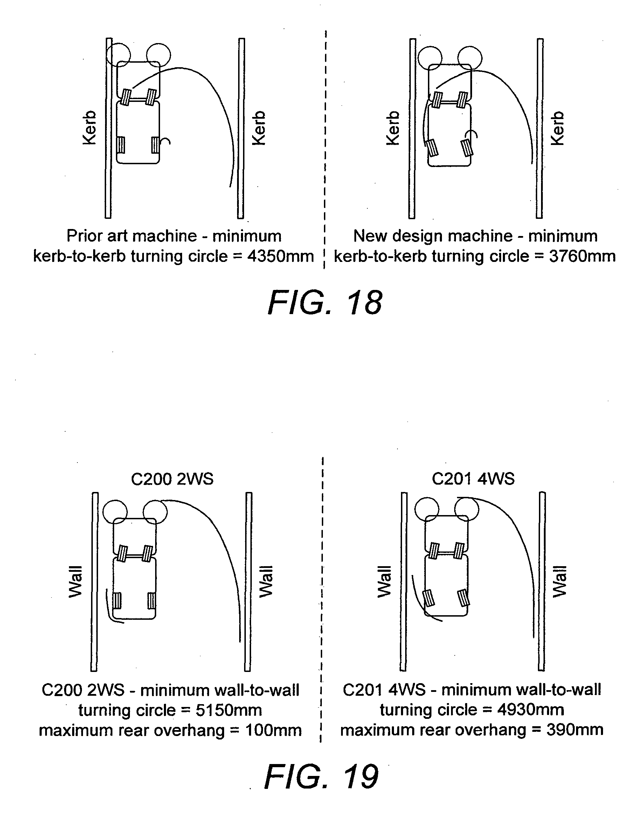

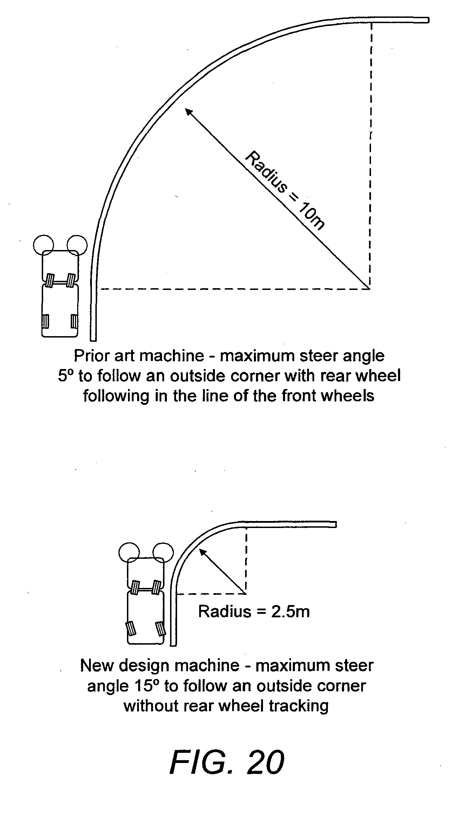

The application of the steering system of the present invention may result in a machine which has a kerb-to-kerb turning circle which is reduced by nearly 15% when compared to the known Johnston C200 two-wheel steer machine (3760 mm compared to 4350 mm diameter of the turning circle as shown in Figure 18. The wall-to-wall turning circle may be reduced by nearly 5% (4930mm compared with 5150 mm, Figure 19). The machine may follow an outside perimeter 400% smaller than the prior art machine (radius of 2.5 m compared with 10m, Figure 20). The improvement of reducing the radii of outer perimeters is by virtue of the centre of the turning arc being closer longitudinally towards the sweeping equipment. The improvement of the reduced inner perimeters is due to a reduced minimum turning arc of the machine.

## Claims

1. A hydraulic steering system for a machine (10) having a longitudinal axis, comprising:
a first steering axis having a first set of wheels (11); and
a second steering axis having a second set of wheels (12), the second set of wheels (12) being operable to be locked at a steering angle of substantially zero degrees relative to the longitudinal axis of the machine (10); **characterised in that**
a control unit is configured to monitor the orientation of the second set of wheels (12) when locked at the steering angle of substantially zero degrees relative to the longitudinal axis of the machine (10) and to correct deviation of the second set of wheels (12) from said orientation.

2. A hydraulic steering system according to claim 1, wherein the control unit is configured to correct the steering angle of the second set of wheels (12) when the speed of the vehicle (10) is below a first predetermined threshold value.

3. A hydraulic steering system according to claim 1 or claim 2, wherein the control unit is configured to correct the steering angle of the second set of wheels (12) when the steering angle of the first set of wheels (11) is within a predetermined range.

4. A hydraulic steering system according to any one of the preceding claims, wherein:
the first set of wheels (11) is located towards the front of the machine (10) and has a first predetermined maximum steering angle; and
the second set of wheels (12) is located towards the rear of the machine (10) and has a second predetermined maximum steering angle;
wherein the first predetermined maximum steering angle is greater than the second predetermined maximum steering angle; and
wherein the first set of wheels (11) and the second set of wheels (12) are configured to steer proportionately up to the second predetermined maximum steering angle, and
the second set of wheels (12) is configured to be locked at the second predetermined maximum steering angle and the first set of wheels (11) is configured to continue steering to the first predetermined maximum steering angle.

5. A hydraulic steering system according to any one of the preceding claims, wherein the control unit is further configured to determine when the second set of wheels (12) should be locked at the steering angle of approximately zero degrees relative to the longitudinal axis of the machine (10).

6. A hydraulic steering system according to any one of the preceding claims, wherein the first predetermined maximum steering angle is approximately 60 degrees relative to the longitudinal axis of the machine (10), and the second predetermined maximum steering angle is approximately 20 degrees relative to the longitudinal axis of the machine (10).

7. A four-wheeled machine (10), comprising:
a hydraulic steering system according to any one of claims 1 to 6; wherein
the control unit is programmed to put the steering system into one of three operational modes; wherein
in a first operational mode, the speed of the machine (10) is greater than a second predetermined threshold speed and the second set of wheels (12) is locked at a steering angle of approximately zero degrees relative to the longitudinal axis of the machine (10), such that only the first set of wheels (11) is operable to steer;
in a second operational mode, the speed of the machine (10) is less than the second predetermined threshold speed and the second set of wheels (12) is operable to steer; and
in a third operational mode, the speed of the machine (10) is less than the second predetermined threshold speed and the second set of wheels (12) is locked at the steering angle of approximately zero degrees relative to the longitudinal axis of the machine (10), such that only the first set of wheels (11) is operable to steer.

8. A four-wheeled machine (10) according to claim 7, wherein the second operational mode is restricted to speeds below the second predetermined threshold value.

9. A method of operating a hydraulic steering system having a first steering axis having a first set of wheels (11) and a second steering axis having a second set of wheels (12), the second set of wheels (12) being operable to be locked at a steering angle of substantially zero degrees relative to a longitudinal axis of the machine (10), the method comprising the steps of:
monitoring (60) the orientation of the second set of wheels (12) when locked at the steering angle of substantially zero degrees relative to the longitudinal axis of the machine (10); and
correcting (65,66) deviation of the second set of wheels (12) from said orientation.

10. A method of operating a hydraulic steering system according to claim 9, further comprising the step of determining (62) when the speed of the vehicle is below a first predetermined threshold value.

11. A method of operating a hydraulic steering system according to claim 10, wherein the correcting step (65,66) is carried out when the speed of the vehicle is below the first predetermined threshold value.

12. A method of operating a hydraulic steering system according to any one of claims 9 to 11, further comprising the step of determining (63) when the steering angle of the first set of wheels is within a predetermined range.

13. A method of operating a hydraulic steering system according to claim 12, wherein the correcting step (65,66) is carried out when the steering angle of the first set of wheels is within the predetermined range.

## Patentansprüche

1. Hydraulisches Lenkungssystem für eine Maschine (10), welche eine Längsachse aufweist, umfassend:
eine erste Lenkungsachse, welche einen ersten Satz von Rädern (11) aufweist; und
eine zweite Lenkungsachse, welche einen zweiten Satz von Rädern (12) aufweist, wobei der zweite Satz von Rädern (12) betreibbar ist, bei einem Lenkungswinkel von im Wesentlichen null Grad relativ zu der Längsachse der Maschine (10) blockiert zu werden; **dadurch gekennzeichnet, dass**
eine Regelungs- / Steuerungseinheit dazu eingerichtet ist, die Orientierung des zweiten Satzes von Rädern (12) zu überwachen, wenn diese bei dem Lenkungswinkel von im Wesentlichen null Grad relativ zu der Längsachse der Maschine (10) blockiert sind, und eine Abweichung des zweiten Satzes von Rädern (12) von der Orientierung zu korrigieren.

2. Hydraulisches Lenkungssystem nach Anspruch 1, wobei die Regelungs- / Steuerungseinheit dazu eingerichtet ist, den Lenkungswinkel des zweiten Satzes von Rädern (12) zu korrigieren, wenn die Geschwindigkeit des Fahrzeugs (10) unterhalb eines ersten vorbestimmten Schwellenwertes ist.

3. Hydraulisches Lenkungssystem nach Anspruch 1 oder Anspruch 2, wobei die Regelungs- / Steuerungseinheit dazu eingerichtet ist, den Lenkungswinkel des zweiten Satzes von Rädern (12) zu korrigieren, wenn der Lenkungswinkel des ersten Satzes von Rädern (11) innerhalb eines vorbestimmten Bereichs ist.

4. Hydraulisches Lenkungssystem nach einem der vorhergehenden Ansprüche, wobei:
der erste Satz von Rädern (11) in Richtung der Front der Maschine (10) angeordnet ist und einen ersten vorbestimmten maximalen Lenkungswinkel aufweist; und
der zweite Satz von Rädern (12) in Richtung des Hecks der Maschine (10) angeordnet ist und einen zweiten vorbestimmten maximalen Lenkungswinkel aufweist;
wobei der erste vorbestimmte maximale Lenkungswinkel größer ist als der zweite vorbestimmte maximale Lenkungswinkel; und
wobei der erste Satz von Rädern (11) und der zweite Satz von Rädern (12) dazu eingerichtet sind, bis zu dem zweiten vorbestimmten maximalen Lenkungswinkel proportional zu lenken, und der zweite Satz von Rädern (12) dazu eingerichtet ist, bei dem zweiten vorbestimmten maximalen Lenkungswinkel blockiert zu werden und der erste Satz von Rädern (11) dazu eingerichtet ist, ein Lenken bis zu dem ersten vorbestimmten maximalen Lenkungswinkel fortzuführen.

5. Hydraulisches Lenkungssystem nach einem der vorhergehenden Ansprüche, wobei die Regelungs- / Steuerungseinheit ferner dazu eingerichtet ist, zu bestimmen, wann der zweite Satz von Rädern (12) bei dem Lenkungswinkel von annähernd null Grad relativ zu der Längsachse der Maschine (10) blockiert werden soll.

6. Hydraulisches Lenkungssystem nach einem der vorhergehenden Ansprüche, wobei der erste vorbestimmte maximale Lenkungswinkel annähernd 60 Grad relativ zu der Längsachse der Maschine (10) ist, und der zweite vorbestimmte maximale Lenkungswinkel annähernd 20 Grad relativ zu der Längsachse der Maschine (10) ist.

7. Vierrädrige Maschine (10), umfassend:
ein hydraulisches Lenkungssystem nach einem der Ansprüche 1 bis 6;
wobei
die Regelungs- / Steuerungseinheit programmiert ist, dass Lenkungssystem in eine von drei Betriebsmodi zu setzen; wobei
in einem ersten Betriebsmodus, die Geschwindigkeit der Maschine (10) größer ist als eine zweite vorbestimmte Schwellengeschwindigkeit und der zweite Satz von Rädern (12) bei einem Lenkungswinkel von annähernd null Grad relativ zu der Längsachse der Maschine (10) blockiert ist, so dass nur der erste Satz von Rädern (11) betreibbar ist, um zu lenken;
in einem zweiten Betriebsmodus, die Geschwindigkeit der Maschine (10) geringer ist als die zweite vorbestimmte Schwellengeschwindigkeit und der zweite Satz von Rädern (12) betreibbar ist, um zu lenken; und
in einem dritten Betriebsmodus, die Geschwindigkeit der Maschine (10) geringer ist als die zweite vorbestimmte Schwellengeschwindigkeit und der zweite Satz von Rädern (12) bei dem Lenkungswinkel von annähernd null Grad relativ zu der Längsachse der Maschine (10) blockiert ist, so dass nur der erste Satz von Rädern (11) betreibbar ist, um zu lenken.

8. Vierrädrige Maschine (10) nach Anspruch 7, wobei der zweite Betriebsmodus auf Geschwindigkeiten unterhalb des zweiten vorbestimmten Schwellenwerts beschränkt ist.

9. Verfahren zum Bedienen eines hydraulischen Lenkungssystems, aufweisend eine erste Lenkungsachse, welche einen ersten Satz von Rädern (11) aufweist, und eine zweite Lenkungsachse, welche einen zweiten Satz von Rädern (12) aufweist, wobei der zweite Satz von Rädern (12) betreibbar ist, bei einem Lenkungswinkel von im Wesentlichen null Grad relativ zu einer Längsachse der Maschine (10) blockiert zu werden, wobei das Verfahren die Schritte umfasst:
Überwachen (60) der Orientierung des zweiten Satzes von Rädern (12), wenn diese bei dem Lenkungswinkel von im Wesentlichen null Grad relativ zu der Längsachse der Maschine (10) blockiert sind; und
Korrigieren (65, 66) von einer Abweichung des zweiten Satzes von Rädern (12) von der Orientierung.

10. Verfahren zum Bedienen eines hydraulischen Lenkungssystems nach Anspruch 9, ferner umfassend den Schritt eines Bestimmens (62), wann die Geschwindigkeit des Fahrzeugs unterhalb eines ersten vorbestimmten Schwellenwerts ist.

11. Verfahren zum Bedienen eines hydraulischen Lenkungssystems nach Anspruch 10, wobei der Korrekturschritt (65, 66) ausgeführt wird, wenn die Geschwindigkeit des Fahrzeugs unterhalb des ersten vorbestimmten Schwellenwerts ist.

12. Verfahren zum Bedienen eines hydraulischen Lenkungssystems nach einem der Ansprüche 9 bis 11, ferner umfassend den Schritt eines Bestimmens (63), wann der Lenkungswinkel des ersten Satzes von Rädern innerhalb eines vorbestimmten Bereichs ist.

13. Verfahren zum Bedienen eines hydraulischen Lenkungssystems nach Anspruch 12, wobei der Korrekturschritt (65, 66) ausgeführt wird, wenn der Lenkungswinkel des ersten Satzes von Rädern innerhalb des vorbestimmten Bereichs ist.

## Revendications

1. Système de direction hydraulique pour une machine (10) ayant un axe longitudinal, comprenant :
un premier axe de direction ayant un premier ensemble de roues (11) ; et
un deuxième axe de direction ayant un deuxième ensemble de roues (12), le deuxième ensemble de roues (12) pouvant fonctionner pour être verrouillé à un angle de braquage essentiellement égal à zéro degré par rapport à l'axe longitudinal de la machine (10) ; **caractérisé en ce que**
une unité de commande est configurée pour surveiller l'orientation du deuxième ensemble de roues (12) lorsqu'il est verrouillé à l'angle de braquage essentiellement égal à zéro degré par rapport à l'axe longitudinal de la machine (10) et pour corriger la déviation du deuxième ensemble de roues (12) de ladite orientation.

2. Système de direction hydraulique selon la revendication 1, dans lequel l'unité de commande est configurée pour corriger l'angle de braquage du deuxième ensemble de roues (12) lorsque la vitesse du véhicule (10) est inférieure à une première valeur seuil prédéterminée.

3. Système de direction hydraulique selon la revendication 1 ou 2, dans lequel l'unité de commande est configurée pour corriger l'angle de braquage du deuxième ensemble de roues (12) lorsque l'angle de braquage du premier ensemble de roues (11) se trouve dans une plage prédéterminée.

4. Système de direction hydraulique selon l'une quelconque des revendications précédentes, dans lequel :
le premier ensemble de roues (11) est situé vers l'avant de la machine (10) et a un premier angle de braquage maximal prédéterminé ; et
le deuxième ensemble de roues (12) est situé vers l'arrière de la machine (10) et a un deuxième angle de braquage maximal prédéterminé ;
dans lequel le premier angle de braquage maximal prédéterminé est supérieur au deuxième angle de braquage maximal prédéterminé ; et
dans lequel le premier ensemble de roues (11) et le deuxième ensemble de roues (12) sont configurés pour être dirigés proportionnellement vers le deuxième angle de braquage maximal prédéterminé, et le deuxième ensemble de roues (12) est configuré pour être verrouillé au deuxième angle de braquage maximal prédéterminé et le premier ensemble de roues (11) est configuré pour continuer à se diriger vers le premier angle de braquage maximal prédéterminé.

5. Système de direction hydraulique selon l'une quelconque des revendications précédentes, dans lequel l'unité de commande est en outre configurée pour déterminer le moment auquel le deuxième ensemble de roues (12) doit être verrouillé à l'angle de braquage égal à environ zéro degré par rapport à l'axe longitudinal de la machine (10).

6. Système de direction hydraulique selon l'une quelconque des revendications précédentes, dans lequel le premier angle de braquage maximal prédéterminé est d'environ 60 degrés par rapport à l'axe longitudinal de la machine (10), et le deuxième angle de braquage maximal prédéterminé est d'environ 20 degrés par rapport à l'axe longitudinal de la machine (10).

7. Machine à quatre roues (10), comprenant :
un système de direction hydraulique selon l'une quelconque des revendications 1 à 6 ; dans lequel
l'unité de commande est programmée pour mettre le système de direction dans l'un de trois modes de fonctionnement ; où
dans un premier mode de fonctionnement, la vitesse de la machine (10) est supérieure à une deuxième vitesse seuil prédéterminée et le deuxième ensemble de roues (12) est verrouillé à un angle de braquage d'environ zéro degré par rapport à l'axe longitudinal de la machine (10), de sorte que seulement le premier ensemble de roues (11) soit capable d'être dirigé ;
dans un deuxième mode de fonctionnement, la vitesse de la machine (10) est inférieure à la deuxième vitesse seuil prédéterminée et le deuxième ensemble de roues (12) est capable d'être dirigé ; et
dans un troisième mode de fonctionnement, la vitesse de la machine (10) est inférieure à la deuxième vitesse seuil prédéterminée et le deuxième ensemble de roues (12) est verrouillé à l'angle de braquage égal à environ zéro degré par rapport à l'axe longitudinal de la machine (10), de sorte que seulement le premier ensemble de roues (11) est capable d'être dirigé.

8. Machine à quatre roues (10) selon la revendication 7, dans lequel le deuxième mode de fonctionnement est limité à des vitesses inférieures à la deuxième valeur seuil prédéterminée.

9. Procédé de fonctionnement d'un système de direction hydraulique ayant un premier axe de direction ayant un premier ensemble de roues (11) et un deuxième axe de direction ayant un deuxième ensemble de roues (12), le deuxième ensemble de roues (12) pouvant fonctionner pour être verrouillé à un angle de braquage essentiellement égal à zéro degré par rapport à un axe longitudinal de la machine (10), le procédé comprenant les étapes qui consistent :
à surveiller (60) l'orientation du deuxième ensemble de roues (12) lorsqu'il est verrouillé à l'angle de braquage essentiellement égal à zéro degré par rapport à l'axe longitudinal de la machine (10) ; et
à corriger (65, 66) une déviation du deuxième ensemble de roues (12) de ladite orientation.

10. Procédé de fonctionnement d'un système de direction hydraulique selon la revendication 9, comprenant en outre l'étape de détermination (62) du moment auquel la vitesse du véhicule est inférieure à une première valeur seuil prédéterminée.

11. Procédé de fonctionnement d'un système de direction hydraulique selon la revendication 10, dans lequel l'étape de correction (65,66) est effectuée lorsque la vitesse du véhicule est inférieure à la première valeur seuil prédéterminée.

12. Procédé de fonctionnement d'un système de direction hydraulique selon l'une quelconque des revendications 9 à 11, comprenant en outre l'étape de détermination (63) du moment auquel l'angle de braquage du premier ensemble de roues se trouve dans une plage prédéterminée.

13. Procédé de fonctionnement d'un système de direction hydraulique selon la revendication 12, dans lequel l'étape de correction (65,66) est effectuée lorsque l'angle de braquage du premier ensemble de roues se trouve dans la plage prédéterminée.
